(19) Europäisches Patentamt
European Patent Office
Office européen des brevets

(11) **EP 4 490 018 B1**

(12) **EUROPÄISCHE PATENTSCHRIFT**

(45) Veröffentlichungstag und Bekanntmachung des Hinweises auf die Patenterteilung:
**08.04.2026   Patentblatt 2026/15**

(21) Anmeldenummer: **23708420.7**

(22) Anmeldetag: **23.02.2023**

(51) Internationale Patentklassifikation (IPC):
**B62D 1/04** *(2006.01)*       **B62D 1/06** *(2006.01)*

(52) Gemeinsame Patentklassifikation (CPC):
**B62D 1/065; B62D 1/046**

(86) Internationale Anmeldenummer:
**PCT/EP2023/054514**

(87) Internationale Veröffentlichungsnummer:
**WO 2023/169827 (14.09.2023 Gazette 2023/37)**

(54) **LENKRADANORDNUNG, FAHRZEUG MIT DER LENKRADANORDNUNG SOWIE VERFAHREN ZUM ÜBERPRÜFEN EINER SKELETTVERBINDUNG BEI DER LENKRADANORDNUNG**

STEERING WHEEL ARRANGEMENT, VEHICLE HAVING THE STEERING WHEEL ARRANGEMENT, AND METHOD FOR VERIFYING A SKELETON CONNECTION IN THE STEERING WHEEL ARRANGEMENT

AGENCEMENT DE VOLANT, VÉHICULE ÉQUIPÉ DE L'AGENCEMENT DE VOLANT ET PROCÉDÉ DE VÉRIFICATION D'UNE CONNEXION DE SQUELETTE DANS L'AGENCEMENT DE VOLANT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **09.03.2022   DE 102022105491**

(43) Veröffentlichungstag der Anmeldung:
**15.01.2025   Patentblatt 2025/03**

(73) Patentinhaber: **ZF Automotive Germany GmbH**
**73553 Alfdorf (DE)**

(72) Erfinder: **SCHMID, Johann**
**83115 Neubeuern (DE)**

(74) Vertreter: **ZF LIFETEC Intellectual Property**
**ZF Automotive Germany GmbH**
**Office Aschau**
**Wernher-von-Braun-Strasse 1**
**84544 Aschau a. Inn (DE)**

(56) Entgegenhaltungen:
**US-A1- 2021 163 055     US-A1- 2021 270 637**
**US-A1- 2021 371 000**

**Beschreibung**

Die Erfindung betrifft eine Lenkradanordnung, ein Fahrzeug mit der Lenkradanordnung sowie ein Verfahren zum Überprüfen einer Skelettverbindung der Lenkradanordnung.

Bei einem teilautonomen oder vollautonomen Fahren ist die Überwachung, ob ein Lenkrad von einem Fahrer mit der Hand gehalten wird oder ob der Fahrer das Lenkrad unbeaufsichtigt zurücklässt, wichtig für die Fahrsicherheit. Handbelegungssysteme/HOD (hands off detection) werden mittlerweile vielfach eingebaut und beruhen oftmals auf einer Kapazitätsmessung einer Kapazität des Lenkrads, welche durch das Auflegen von mindestens einer Hand auf das Lenkrad geändert wird.

Die Druckschrift DE 102014223128 A1 offenbart ein Lenkrad mit einem Sensoraufbau zur Belegterkennung einer beheizten Kontaktfläche, umfassend: eine Kontaktfläche, die zumindest einen Teil der Außenschicht des Lenkrads ausbildet; ein Lenkradskelett; ein Sensorabschnitt, in der mindestens eine Sensorelektrode zur Belegterkennung und mindestens ein Heizdraht angeordnet sind; und eine Potenzialschicht, die zwischen der Sensor-Heizschicht und dem Lenkradskelett angeordnet ist, wobei an der Potenzialschicht ein definiertes Potenzial anlegbar ist.

Ferner ist aus der gattungsgemäßen US 2021/270637 A1 eine Lenkradanordnung mit den Merkmalen im Oberbegriff des Anspruchs 1 bekannt.

Es ist eine Aufgabe der Erfindung, eine Lenkradanordnung vorzuschlagen, deren Status einfach und kostengünstig überprüft werden kann. Diese Aufgabe wird durch eine Lenkradanordnung mit den Merkmalen des Anspruchs 1, durch ein Fahrzeug mit den Merkmalen des Anspruchs 10 sowie durch ein Verfahren zur Überprüfung einer Skelettverbindung mit den Merkmalen des Anspruchs 11 gelöst. Aus den Unteransprüchen, der nachfolgenden Beschreibung und den Figuren ergeben sich vorteilhafte oder bevorzugte Ausführungsformen der Erfindung.

Gegenstand der Erfindung ist eine Lenkradanordnung, welche für ein Fahrzeug geeignet/oder ausgebildet ist. Das Fahrzeug kann als ein Personenkraftwagen, Lastkraftwagen, jedoch auch als ein Fahrrad, Dreirad, Zweirad etc. ausgebildet sein.

Die Lenkradanordnung weist eine Lenkradeinrichtung auf, wobei die Lenkradeinrichtung bevorzugt einen insbesondere runden Lenkradkranz - auch Lenkradring genannt - umfassen kann. Es ist jedoch auch möglich, dass die Lenkradeinrichtung auf zwei Griffbereiche reduziert ist und/oder wie eine liegende Acht ausgestaltet ist. Es ist ferner möglich, dass die Lenkradeinrichtung als ein Lenker mit zwei Lenkerenden oder Hörnchen ausgebildet ist. Insbesondere ist die Lenkradeinrichtung als eine Mensch-Maschinen-Schnittstelle ausgebildet, über die ein Fahrer des Fahrzeugs mechanisch einen Lenkbefehl an das Fahrzeug übergibt.

Die Lenkradeinrichtung weist ein Lenkradskelett auf. Das Lenkradskelett ist bevorzugt aus einem metallischen Werkstoff ausgebildet. Beispielsweise ist das Lenkradskelett aus einer Aluminiumlegierung und/oder aus einer Magnesiumlegierung gefertigt. Das Lenkradskelett weist beispielsweise den Lenkradkranz auf, welcher über Speichen mit einer Nabe verbunden ist. Der Lenkradkranz, die Speichen und die Nabe bilden gemeinsam das Lenkradskelett.

Ferner weist die Lenkradeinrichtung eine erste Leitlage und eine zweite Leitlage auf. Die Leitlagen bilden jeweils mindestens einen leitfähigen Leiterabschnitt aus. Der leitfähige Leiterabschnitt kann als eine Einzelleitung, ein Leitungsgitter oder dergleichen ausgebildet sein. Besondere bevorzugt ist der leitfähige Leiterabschnitt in einem Griffbereich der Lenkradeinrichtung integriert. Beispielsweise weist der leitfähige Leiterabschnitt eine metallische Leitung auf. Bevorzugt sind die erste Leitlage, die zweite Leitlage und das Lenkradskelett konzentrisch und/oder in einem Querschnitt schichtweise zueinander angeordnet, wobei insbesondere in einem Griffbereich des Lenkradskeletts und/oder am Kranz des Lenkradskeletts die zweite Leitlage zwischen der ersten Leitlage und dem Lenkradskelett angeordnet ist.

Zwischen der ersten Leitlage und der zweiten Leitlage ist eine Zwischenlagenkapazität ausgebildet. Insbesondere bilden die erste Leitlage und die zweite Leitlage einen Zwischenlagenkondensator.

Zwischen der zweiten Leitlage und dem Lenkradskelett ist eine Skelettkapazität ausgebildet. Insbesondere bilden die zweite Leitlage und das Lenkradskelett einen Skelettkondensator aus oder bilden diesen zumindest mit.

Das Lenkradskelett ist über eine Skelettverbindung mit einer Masse des Fahrzeugs gekoppelt. Zum einen ist es möglich, dass die Skelettverbindung mit der Masse des Fahrzeugs galvanisch verbunden und/oder verbindbar ist. Alternativ hierzu ist in der Skelettverbindung zu der Masse des Fahrzeugs eine Anbindungskapazität, insbesondere ausgebildet als ein Anbindungskondensator, angeordnet. Vorzugsweise ist die Anbindungskapazität mindestens 10mal größer als die Zwischenlagenkapazität oder die Skelettkapazität. Konstruktiv betrachtet weist die Skelettverbindung bevorzugt einen Kabelabschnitt auf, wobei der Kabelabschnitt mit der Lenkradanordnung verbunden ist und an das Fahrzeug anschließbar und/oder angeschlossen ist. Gegebenenfalls ist die Massekapazität seriell in, vor oder nach dem Kabelabschnitt angeordnet und/oder besonders bevorzugt als Kondensatorbauteil oder Kondensatorbauteilgruppe ausgebildet.

Die Zwischenlagenkapazität und die Skelettkapazität bilden gemeinsam einen kapazitiven Spannungsteiler für eine an der ersten Leitlage anliegende Spannung. Durch die kapazitive Spannungsteilung liegt eine Teilspannung, insbesondere der an der ersten Leitlage anliegenden Spannung, an der zweiten Leitlage an, so dass diese abgegriffen werden kann. Die zweite Leitlage bildet insbesondere einen Mittelabgriff an dem kapazitiven Spannungsteiler.

Im Rahmen der Erfindung wird vorgeschlagen, dass die Lenkradanordnung eine Auswerteeinrichtung aufweist. Insbesondere ist die Auswerteeinrichtung als eine digitale Datenverarbeitungseinrichtung ausgebildet. Optional kann die Auswerteeinrichtung auch analoge Komponenten aufweisen. Alternativ hierzu ist die Auswerteeinrichtung als ein analoger Schaltkreis realisiert.

Die Auswerteeinrichtung ist insbesondere programmtechnisch und/oder schaltungstechnisch ausgebildet, die Teilspannung an der zweiten Leitlage zu erfassen und auf Basis der erfassten Teilspannung die Skelettverbindung als in Ordnung (i.O.) oder als nicht in Ordnung (n.i.O.) zu beurteilen. Die Teilspannung kann als ein Spannungswert, z.B. in Volt, ausgebildet sein. Alternativ ist die Teilspannung als ein analoger oder digitaler Referenzwert zu dem Spannungswert ausgebildet. Die Skelettverbindung kann auch über die Auswerteeinrichtung mit der Masse des Fahrzeugs gekoppelt sein.

Die Beurteilung kann als ein Kontrollsignal an eine Überwachungseinheit zur Weiterverarbeitung ausgegeben werden und/oder als Lichtsignal dem Fahrer angezeigt werden.

Es ist dabei eine Überlegung der Erfindung, dass der grundsätzliche konstruktive Aufbau einer derartigen Lenkradanordnung alle Komponenten eines kapazitiven Spannungsteilers bereits aufweist. Ferner wurde in der Erfindung erkannt, dass bei einem Defekt an der Skelettverbindung sich die Spannungsverhältnisse in dem kapazitiven Spannungsteiler so stark ändern, dass ein derartiger Defekt in einfacher Weise durch Überprüfung der Teilspannung, oder einer Referenzgröße, welche auf der Teilspannung beruht, zuverlässig erkannt werden kann.

Es ist dabei eine weitergehende Überlegung der Erfindung, dass gängige Handerkennungseinrichtungen auf einer kapazitiven Basis arbeiten, wobei die Kapazität von dem mit Masse gekoppelten Lenkradskelett abhängt. Sofern die Skelettverbindung defekt oder z.B. aufgrund einer Fehlmontage nicht vorhanden ist, kann auch die Handerkennung über die Handerkennungseinrichtung nicht oder zumindest nicht zuverlässig durchgeführt werden. Durch die erfindungsgemäße Lenkradanordnung wird ohne oder zumindest nur mit einem geringen, zusätzlichen Hardwareaufwand der Status der Lenkradanordnung hinsichtlich der Skelettverbindung sicher und kostengünstig geprüft.

Bei einer bevorzugten Ausgestaltung der Erfindung weist die Lenkradanordnung eine Steuereinrichtung auf. Die Steuereinrichtung ist insbesondere als eine digitale Datenverarbeitungseinrichtung ausgebildet. Alternativ kann die Steuereinrichtung auch analoge Komponenten aufweisen. Alternativ hierzu ist die Steuereinrichtung als ein analoger Schaltkreis ausgebildet. Die Steuereinrichtung ist insbesondere programmtechnisch und/oder schaltungstechnisch ausgebildet, in einer ersten Phase die erste Leitlage und die zweite Leitlage in einen jeweils definierten ersten Spannungszustand zu bringen. Dabei kann vorgesehen sein, dass der erste Spannungszustand bei den beiden Leitlagen unterschiedlich ausgebildet ist. Es ist jedoch bevorzugt, dass der Spannungszustand bei den beiden Leitlagen gleich ausgebildet ist.

Die Steuereinrichtung ist ferner insbesondere programmtechnisch und/oder schaltungstechnisch ausgebildet, in einer zweiten Phase die zweite Leitlage zu entkoppeln, insbesondere hochohmig, im Speziellen derart, dass sich in der ersten Leitlage ein schwebendes Potenzial ergibt, zu setzen, und die erste Leitlage in einen zweiten Spannungszustand zu bringen, wobei der zweite Spannungszustand unterschiedlich zu dem ersten Spannungszustand ausgebildet ist. Die Auswerteeinrichtung ist insbesondere programmtechnisch und/oder schaltungstechnisch ausgebildet, die Teilspannung in der zweiten Phase zu messen.

In der ersten Phase werden somit die beiden Leitlagen auf ein definiertes Potenzial gesetzt. In der zweiten Phase wird die erste Leitlage entkoppelt und/oder hochohmig gesetzt, insbesondere derart, dass sich in der ersten Leitlage ein schwebendes Potenzial ergibt, und die zweite Leitlage auf ein anderes Potenzial gebracht. Durch die Anordnung als kapazitiver Spannungsteiler ändert sich die Teilspannung in der zweiten Leitlage in Abhängigkeit der anliegenden Kapazitäten. Insbesondere die Skelettkapazität ist bei einer defekten Skelettverbindung und einer funktionierenden Skelettverbindung unterschiedlich ausgebildet, so dass auf Basis der gemessenen Teilspannung die Skelettverbindung als in Ordnung oder als nicht in Ordnung beurteilt werden kann.

Bei einer möglichen Ausgestaltung der Erfindung liegen in den ersten Spannungszustand die erste und/oder die zweite Leitlage auf Masse. In dem zweiten Spannungszustand und/oder in der zweiten Phase liegt an der ersten Leitlage eine Gleichspannung an. Vorzugsweise ist die zweite Leitlage elektrisch isoliert. Durch diesen dynamischen Wechsel der Spannungszustände wird eine Änderung der Teilspannung erreicht, welche messtechnisch durch die Auswerteeinrichtung erfasst werden kann.

Bei einer alternativen Ausgestaltung der Erfindung entspricht der erste Spannungszustand einer Gleichspannung, wobei nach dem Trennen der zweiten Leitlage und dem Hochohmig setzen, der zweite Spannungszustand der ersten Leitlage einer anderen Gleichspannung oder einer Masse entspricht. Auch in dieser Verfahrensfolge kann ein Defekt an der Skelettverbindung sicher über die Teilspannung erkannt werden.

Die Beurteilung der Teilspannung in Bezug auf den Status der Skelettverbindung (i.O./n.i.O.), kann beispielsweise durch Vergleich der Teilspannung mit einem abgespeicherten, insbesondere vorgegebenen oder gelernten, Referenzwert erfolgen.

Optional weist die Lenkradanordnung eine Umgebungskapazität auf, wobei die Umgebungskapazität zwischen der ersten Leitlage und dem Lenkradskelett ausgebildet ist.

Bei einer möglichen konstruktiven Ausgestaltung der Erfindung sind die Auswerteeinrichtung und die Steuereinrichtung als eine gemeinsame Datenverarbeitungsvorrichtung ausgebildet. Insbesondere sind diese als eine gemeinsame ECU und/oder als ein gemeinsamer Chip, im speziellen Microcontroller, oder als ein gemeinsamer Chip auf einer gemeinsamen ECU ausgebildet. Durch die Ausgestaltung in Form einer gemeinsamen Datenverarbeitungsvorrichtung kann die Überwachung der Skelettverbindung besonders kostengünstig umgesetzt werden.

Es ist besonders bevorzugt, dass der der Anschluss der ersten Leitlage als ein erstes GPIO und/oder der Anschluss der zweiten Leitlage als ein zweites GPIO bei der gemeinsamen Datenverarbeitungsvorrichtung ausgebildet ist (GPIO = Generalpurpose input/output). Derartige Schnittstellen sind kostengünstig auf den Chip umzusetzen oder ohnehin bereits in Überzahl vorhanden, so dass die Hardwareumsetzung quasi kostenneutral realisiert werden kann.

In einer bevorzugten, produktnahen Umsetzung ist die erste Lage als eine Sensorlage für eine HOD-Funktion (Hands Off Detection) ausgebildet. Insbesondere weist die Lenkradanordnung eine Handerkennungseinrichtung zur Umsetzung der auf HOD-Funktion auf. Die Handerkennungseinrichtung ist insbesondere als eine kapazitive Handerkennungseinrichtung ausgebildet. Wie bereits erläutert ist bei einer kapazitiven Handerkennungseinrichtung die Definition des Potenzials an dem Lenkradskelett für eine zuverlässige Handerkennung besonders wichtig. Durch die erfindungsgemäße Lenkradanordnung kann der Status der Lenkradanordnung, insbesondere der Status der Skelettverbindung, zuverlässig überprüft werden und dadurch die HOD-Funktion sichergestellt werden. Beispielsweise kann bei einer Beurteilung der Skelettverbindung als nicht in Ordnung die Handerkennungseinrichtung als defekt oder inaktiv eingestuft werden.

Bei einer bevorzugten Weiterbildung der Erfindung ist vorgesehen, dass die Handerkennungseinrichtung in der gemeinsamen Datenverarbeitungsvorrichtung, insbesondere in dem gemeinsamen Chip ausgebildet ist. Diese Weiterbildung unterstreicht nochmals den Vorteil, dass die Überprüfung der Funktionsfähigkeit der Skelettverbindung quasi hardwareneutral durchgeführt werden kann.

Prinzipiell kann die Lenkradeinrichtung auf die zwei Leitlagen beschränkt sein. Bei einer möglichen Alternative der Erfindung weist die Lenkradeinrichtung mindestens oder genau eine dritte Leitlage auf, wobei die dritte Leitlage zwischen der zweiten Leitlage und dem Lenkradskelett angeordnet ist. Die Skelettkapazität wird dann durch eine Einzelkapazität zwischen der zweiten Leitlage und der dritten Leitlage sowie einer zweiten Einzelkapazität zwischen der dritten Leitlage und dem Lenkradskelett gebildet. Bevorzugt ist die dritte Leitlage als eine Heizungslage ausgebildet.

Es kann vorgesehen sein, dass die zweite Leitlage als eine Heizungslage und/oder als eine Guard-Lage zur Überprüfung der Funktionsfähigkeit der ersten Leitlage/Sensorlage ausgebildet ist.

Ein weiterer Gegenstand betrifft ein Fahrzeug, wobei das Fahrzeug die Lenkradanordnung aufweist. Ein weiterer Gegenstand der Erfindung betrifft ein Verfahren zur Überprüfung der Skelettverbindung mit der Lenkradanordnung wie diese zuvor beschrieben wurde, wobei die Teilspannung an der zweiten Leitlage erfasst und auf Basis der erfassten Teilspannung die Skelettverbindung als in Ordnung oder als nicht in Ordnung beurteilt wird.

Weitere Merkmale, Vorteile und Wirkungen der Erfindung ergeben sich aus den nachfolgenden Ausführungsbeispielen sowie den beigefügten Figuren:

Figur 1 in einer schematischen Darstellung eine Lenkradanordnung als ein Ausführungsbeispiel der Erfindung;

Figuren 2a, b, c Ersatzschaltbilder eines ersten Ausführungsbeispiels der Lenkradanordnung in der Figur 1 in einer Grundphase, ersten Phase und zweiten Phase zur Illustration des Verfahrens;

Figur 3 ein Ersatzschaltbild eines zweiten Ausführungsbeispiels der Lenkradanordnung in der Figur 1 in einer Grundphase.

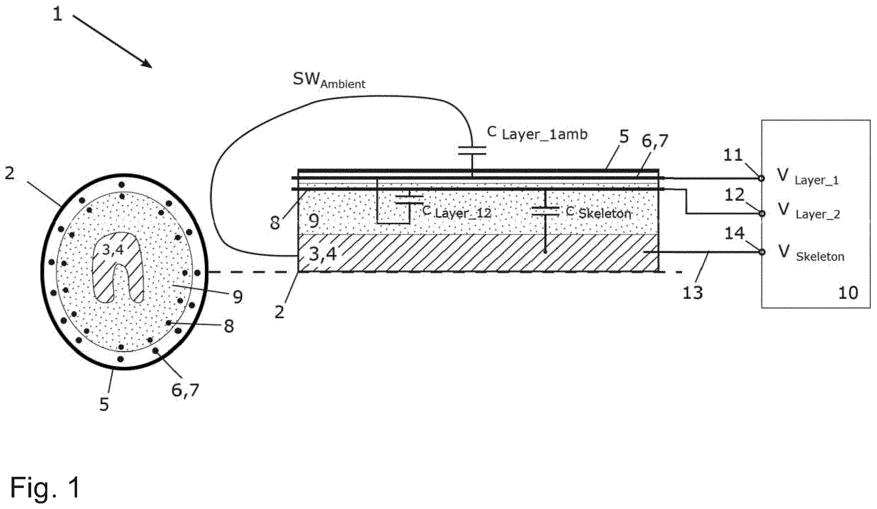

Die Figur 1 zeigt in einer schematischen Darstellung eine Lenkradanordnung 1 mit einer Lenkradeinrichtung 2 als ein Ausführungsbeispiel der Erfindung. Die Lenkradeinrichtung 2 dient zur Lenkung eines Fahrzeugs (nicht gezeigt).

Die Lenkradeinrichtung 2 weist ein Lenkradskelett 3 mit - in diesem Ausführungsbeispiel - einem umlaufenden Lenkradkranz 4 (oder Lenkring) auf, welcher in einem Längsschnitt mit seinen Lagen schematisiert dargestellt ist. Der Lenkradkranz 4 kann mit dem Lenkradskelett 3 einteilig ausgebildet sein, alternativ sind Lenkradkranz 4 und Lenkradskelett 3 zwei unterschiedliche Bauteile, die jedoch elektrisch leitend miteinander verbunden sind.

Auf dem Lenkradkranz 4 ist eine äußere Abstandsschicht 5, wie zum Beispiel eine Lederummantelung oder Kunststoffummantelung angeordnet. Daran angrenzend oder benachbart befindet sich eine erste Leitlage 6, welche optional eine Sensorlage 7 bildet. Über eine Isolierschicht getrennt ist eine zweite Leitlage 8 angeordnet. Über eine Schaumschicht 9 liegt der Schichtaufbau elektrisch isoliert an dem Lenkradkranz 4 und damit an dem Lenkradskelett 3 an. Die erste Leitlage 6 und die zweite Leitlage 8 sind - wie es auf der linken Seite der Figur 1 in einem Querschnitt durch die Lenkradeinrichtung 2 zu erkennen ist - konzentrisch um den Lenkradkranz 4 und damit um das Lenkradskelett 3 in einem Griffbereich für den Fahrer angeordnet. Es können auch andere Isolierschichten eingesetzt werden.

In dem gezeigten Querschnitt ist zu erkennen, dass die erste Leitlage 6 und/oder die zweite Leitlage 8 durch eine um den Lenkradkranz 4 gewickelte, leitfähige Leitung gebildet ist. Damit bildet die erste und/oder die zweite Leitlage 6, 8 mindestens einen leitfähigen Sensorabschnitt aus.

Zwischen der ersten Leitlage 6 und der zweiten Leitlage 8 ist eine Zwischenlagenkapazität C_Layer_12 ausgebildet. Zwischen der zweiten Leitlage 8 und dem Lenkradskelett 3 ist eine Skelettkapazität C_Skeleton ausgebildet. Optional ergänzend kann zwischen dem Lenkradskelett 3 und der ersten Leitlage 6 eine Umgebungskapazität C_Layer_1amb ausgebildet sein.

Die Lenkradanordnung 1 weist eine digitale Datenverarbeitungsvorrichtung 10 auf, welche beispielsweise als eine ECU realisiert ist, wobei die erste Leitlage 6 mit einem ersten Anschluss 11 der digitalen Datenverarbeitungsvorrichtungen 10 verbunden ist, so dass eine Spannung V_Layer_1 an dem ersten Anschluss 11 anliegt oder bereitgestellt wird. Die zweite Leitlage 8 ist über einen zweiten Anschluss 12 der digitalen Datenverarbeitungsvorrichtungen 10 verbunden, so dass eine Spannung V_Layer_2 an dem zweiten Anschluss 12 anliegt oder bereitgestellt wird.

Das Lenkradskelett 3 und insbesondere der Lenkradkranz 4 ist über eine Skelettverbindung 13 mit einem dritten Anschluss 14 der digitalen Datenverarbeitungsvorrichtungen 10 verbunden, so dass eine Spannung V_Skeleton an dem dritten Anschluss 14 anliegt. Der dritte Anschluss 14 ist mit einer Masse des Fahrzeugs verbunden oder verbindbar, so dass das Lenkradskelett 3 über die Skelettverbindung 13 mit der Masse gekoppelt ist. Alternativ ist die Skelettverbindung 13 ohne die digitale Datenverarbeitungsvorrichtung 10 mit der Masse gekoppelt bzw. koppelbar. Die Skelettverbindung 13 ist beispielsweise als ein Kabel ausgebildet.

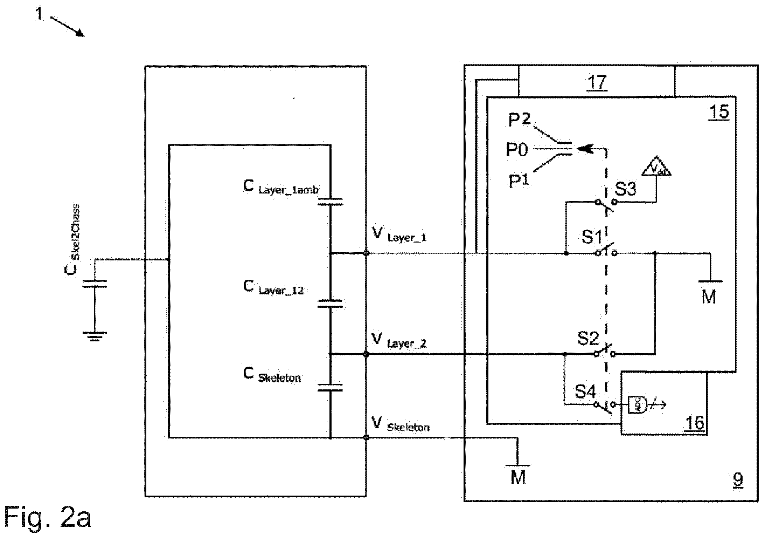

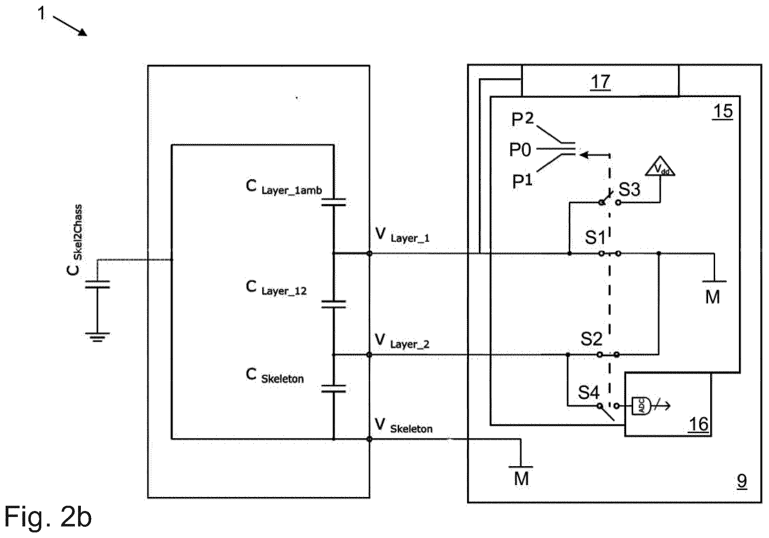

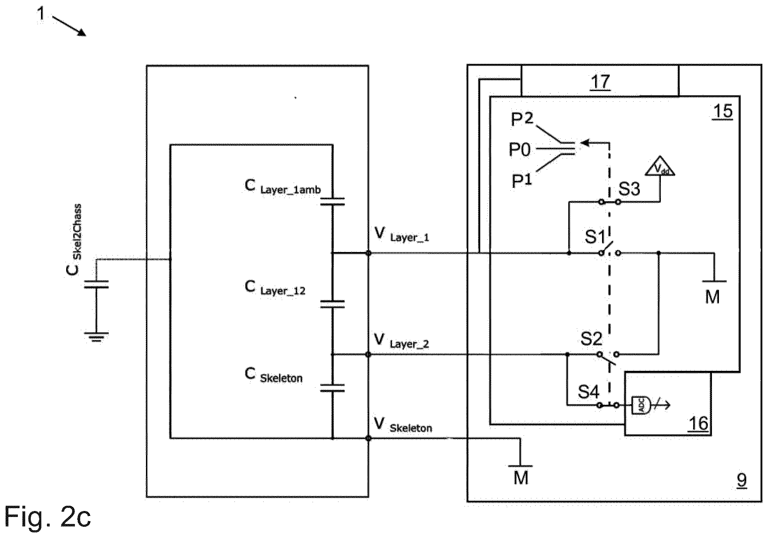

Die Figuren 2a, b, c zeigen jeweils ein Ersatzschaltbild der Lenkradanordnung 1 in der Figur 1, wobei die gleichen Komponenten mit den gleichen Bezugszeichen bzw. Bezeichnungen versehen sind. Ergänzend ist eine Fahrzeugkapazität C_Skel2chass eingezeichnet, die die Kapazität zwischen dem Fahrzeug und dem Lenkradskelett 3 beschreibt. Bevorzugt ist eine galvanische Trennung zu der Masse des Fahrzeugs vorgesehen.

In der digitalen Datenverarbeitungseinrichtung 10 sind vier Schalter S1...S4 eingetragen, wobei der Schalter S1 die erste Leitlage 6 und der Schalter S2 die zweite Leitlage 8 mit einer Masse M verbindet. Der Schalter S3 verbindet die erste Leitlage 6 mit einer Gleichspannung Vdd, beispielsweise mit einer Versorgungsspannung, der Schalter S4 verbindet die zweite Leitlage mit einem Analog-Digital-Wandler ADC. Verbinden meint, dass der jeweilige Schalter in einem geschlossenen Zustand eine leitende Verbindung herstellt und in einem geöffneten Zustand die leitende Verbindung geöffnet ist. Die Schalter S1...S4 dienen insbesondere zur Darstellung der Funktion und können auch als Doppelschalter, Wechselschalter etc. ausgebildet sein.

Die Figur 2a zeigt eine mögliche Grundphase P0, wobei alle Schalter S1...S4 geöffnet sind. Die Grundphase muss nicht zwingend eingenommen werden.

In der Grundphase P0 sind alle Schalter S1...S4 geöffnet, so dass die erste Leitlage 6 und die zweite Leitlage 8 elektrisch isoliert in der digitalen Datenverarbeitungsvorrichtung 10 angeschlossen sind. Die Grundphase P0 muss nicht zwingend eingenommen werden, sondern stellt eine Option dar.

Die Figur 2 b zeigt eine erste Phase P1, wobei die Schalter S1 und S2 geschlossen und die Schalter S3 und S4 geöffnet sind. Die erste Leitlage 6 und die zweite Leitlage 8 sind mit der Masse M der digitalen Datenverarbeitungseinrichtung 10 verbunden. Die Skelettverbindung 13 ist mit der gleichen Masse M in der digitalen Datenverarbeitungseinrichtung 10 verbunden. Optional ist die Masse M der digitalen Datenverarbeitungseinrichtung 10 mit einer Masse des Fahrzeugs leitend verbunden. In der ersten Phase P1 werden somit die erste Leitlage 6 und die zweite Leitlage 8 auf einen in diesem Fall gemeinsamen ersten Spannungszustand, nämlich Masse M, gebracht.

Die Figur 2 c zeigt eine zweite Phase P2, wobei die Schalter S1 und S 2 geöffnet sind. Nach dem Öffnen der Schalter S1 und S2 werden die Schalter S3 und S4 geschlossen. Somit liegt an der ersten Lage 6 die Gleichspannung Vdd, zum Beispiel 5 V, an. Die zweite Leitlage 8 ist dagegen hochohmig gesetzt und mit dem Analog-Digital-Wandler ADC verbunden.

Durch den Wechsel zwischen der ersten Phase P1 zu der zweiten Phase P 2 stellt sich in dem kapazitiven Teiler, welcher durch die Zwischenlagenkapazität C_Layer_12 und der Skelettkapazität C_Skeleton an dem Mittelabgriff, welcher durch die zweite Leitlage 8 gebildet ist, eine Teilspannung ein. Diese Teilspannung wird durch den Analog-Digital-Wandler ADC gemessen.

Für den Fall, dass die Skelettverbindung 13 in Ordnung (i.O.) ist, ergibt sich ein Referenzwert für diese Teilspannung. Dieser Referenzwert wird in der digitalen Datenverarbeitungseinrichtung 10 abgespeichert. Für den Fall, dass die Skelettverbindung 13 defekt ist, also nicht in Ordnung (n.i.O.) ist, ergibt sich für die Teilspannung ein davon abweichender Wert. Die Skelettverbindung 13 ist in der Ausbildung als Kabel beispielsweise nicht in Ordnung, wenn das Kabel unterbrochen oder nicht angeschlossen ist. Durch einen Vergleich der Teilspannung in der zweiten Phase P2 mit dem zuvor ermittelten Referenzwert kann somit sicher auf einen Defekt in der Skelettverbindung 13 geschlossen werden.

Die digitale Datenverarbeitungseinrichtung 10 umfasst funktional betrachtet eine Steuereinrichtung 15, welche die Ansteuerung der Schalter S1...S4 steuert. Ferner weist die digitale Datenverarbeitungseinrichtung 10 eine Auswerteeinrichtung 16 auf, wobei die Auswerteeinrichtung 16 die Messung der Teilspannung mit dem Analog-Digital-Wandler ADC übernimmt und eine Beurteilung durch Vergleich mit dem Referenzwert ausführt, ob die Skelettverbindung 13 in Ordnung oder nicht in Ordnung (i.O./n.i.O) ist. Optional weist die digitale Datenverarbeitungsvorrichtung 10 eine Handerkennungseinrichtung 17 auf, wobei die Handerkennungseinrichtung 17 die erste Lage 6 als die Sensorlage 7 verwendet und über eine kapazitive Messung ermittelt, ob der Fahrer eine Hand an der Lenkradeinrichtung 2, insbesondere am Lenkradkranz 4, im Speziellen im Griffbereich des Lenkradkranzes 4 hält oder ob dieser die Lenkeinrichtung 2 bzw. den Lenkradkranz 4 nicht berührt. Beispielsweise kann die Beurteilung der Auswerteeinrichtung 16 an die Handerkennungseinrichtungen 17 weitergeleitet werden, wobei für den Fall, dass die Skelettverbindung 13 als nicht in Ordnung (n.i.O.) beurteilt wird, die Handerkennungseinrichtungen 17 als nicht einsatzbereit klassifiziert wird und/oder zum Beispiel eine Fehlermeldung über eine optische Signaleinrichtung (nicht gezeigt) dem Fahrer angezeigt wird.

Der erster Anschluss 11 und der zweite Anschluss 12 können dabei jeweils als ein GPIO (general purpose input/output) ausgebildet sein, wobei die Funktionen des Verbindens mit der Masse M der digitalen Datenverarbeitungsvorrichtung 10, die Verbindung mit der Gleichspannung Vdd und/oder die Verbindung mit dem Analog-Digital-Wandler ADC schaltungstechnisch durch die GPIOs realisiert werden. Derartige GPIOs sind bei üblichen Chips, insbesondere Mikrocontrollern, entweder ohnehin bereits vorhanden oder sehr kostengünstig umsetzbar, so dass die Überwachung der Skelettverbindung 13 quasi hardwareneutral und damit kostenneutral umgesetzt werden kann. Insbesondere ist die digitale Datenverarbeitungsvorrichtung 10 als ein Microcontroller mit den GIPOs ausgebildet.

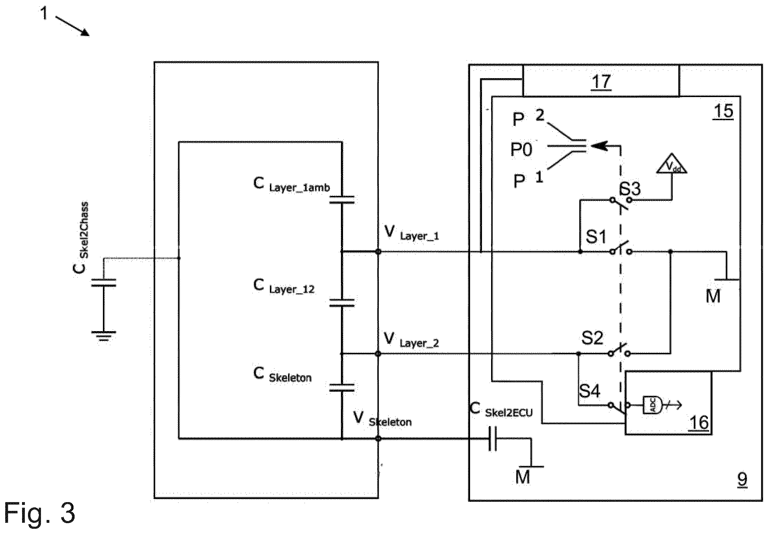

Die Figur 3 zeigt ein Ersatzschaltbild der Lenkradanordnung 1 in der Figur 1 in einer abgewandelten Ausführungsformen, wobei die Skelettverbindung 13 über eine Anbindungskapazität C_SekI2ECU mit der Masse der digitalen Datenverarbeitungseinrichtung 10 und/oder der Masse des Fahrzeugs verbunden ist.

Nachfolgend wird eine Modellrechnung dargestellt, wie der Unterschied zwischen dem Referenzwert der Teilspannung und der Teilspannung bei einer Skelettverbindung 13, welche nicht in Ordnung ist, berechnet wird:

Phase P1:
In der ersten Phase P1 wird VLayer_1 und VLayer_2 zu Null Spannung gegen ECU Ground (Masse M) gesetzt.
Phase P2 bei intakter Skeletverbindung 13:
In Phase 2 werden zuerst VLayer_1 und VLayer_2 von ECU Ground (Masse M) getrennt. Daraufhin wird VLayer_1 mit der Gleichspannung VDD der ECU, also der digitalen Datenverarbeitungsvorrichtung 10, verbunden und es stellt sich nach kurzem Aufladen an VLayer_2 folgende Teilspannung ein, welche den Referenzwert bildet:

$$V_{Layer\_2} = V_{DD} \frac{C_{Layer\_12}}{C_{Skeleton} + C_{Layer\_12}}$$

Phase P2 bei unterbrochener Skeletverbindung 13:
Ist nun die Verbindung von Lenkradskelet 3 zu ECU Gnd (Masse) unterbrochen so stellt sich in Phase P2 nach dem Umladen an der nun auf der Lenkradskelettseite der unterbrochenen Skelettverbindung 13 eine von 0 (Masse M) verschiedene Spannung ein:

$$V_{Skleleton_{broke}} = V_{DD} \frac{C_{Layer_{1amb}} + \left( C_{Layer_{12}} |\ |C_{Skleton} \right)}{C_{Skel2Chass} + C_{Layer_{1amb}} + \left( C_{Layer_{12}} |\ |C_{Skleton} \right)}$$

$$mit \quad C_{Layer\_12} || C_{Skleton} = \frac{C_{Layer\_12} * C_{Skleton}}{C_{Layer\_12} + C_{Skleton}}$$

Für die gemessene Teilspannung an der zweiten Leitlage 8 ergibt sich bei unterbrochener Skelettverbindung 13:

$$V_{Layer\_2} = \left( V_{DD} - V_{Skleleton\_broke} \right) \frac{C_{Layer\_12}}{C_{Skeleton} + C_{Layer\_12}}$$

$$\Delta V_{Layer_2} = \left( V_{DD} - V_{Skleleton_{broke}} \right) \frac{C_{Layer_{12}}}{C_{Skeleton} + C_{Layer_{12}}} - V_{DD} \frac{C_{Layer_{12}}}{C_{Skeleton} + C_{Layer_{12}}}$$

$$= - V_{Skleleton\_broke} \frac{C_{Layer\_12}}{C_{Skeleton} + C_{Layer\_12}}$$

$$\Delta V_{Layer\_2} = -V_{DD} \frac{1}{1 + \dfrac{C_{Skel2Chass}}{C_{Layer\_1amb} + \left( C_{Layer\_12} \| C_{Skleton} \right)}} \frac{C_{Layer\_12}}{C_{Skeleton} + C_{Layer\_12}}$$

Für typische Lenkradapplikationen wie in der Figur 1 kann aufgrund geometrischer Gegebenheiten angenommen werden:

### Geometrierandbedingung 1:

$$C_{Skel2Chass} < C_{Layer\_1amb} < C_{Layer\_12} \ und \ C_{Skeleton}$$

### Geometrierandbedingung 2:

$$\frac{1}{3} C_{Skeleton} < C_{Layer\_12} < 3\, C_{Skeleton}$$

Daraus folgt für Lenkradapplikationen:

$$\frac{5}{36}\, V_{DD} < \Delta V_{Layer\_2} < \frac{21}{44}\, V_{DD}$$

Das heißt das sich bei allen gängigen Lenkradkonfigurationen die unterbrochene Skelettverbindung 13 zum Lenkradskelet 3 sicher messen lässt, da sie mindestens einen Spannungsunterschied von 5/36 V_DD an dem zweiten Anschluss 12 der zweiten Leitlage 8/ Layer_2 beträgt.

Beispiel:

Bei einem 10Bit Analog-Digital-Wandler ADC ergibt der Verlust der Skelet Anbindung mindestens einen Unterschied von 5/36*1023Bit=142Bit in der Abtastung von VLayer_2

In der nachfolgenden Tabelle sind verschieden Einsatzmöglichkeiten der Skeletdiagnose aufgeführt. Dabei ist anzumerken, dass bei den Lagen, die sich die HOD und Heizungsfunktion mit der Skeletdiagnose teilen die beiden Funktionen nicht simultan ausgeführt werden können. HOD und Skeletdiagnose benötigen also eigenes Zeitfenster, in denen die Funktion ausgeführt wird. Bei dem dreilagigen System kann die Heizung simultan zur Skeletdiagnose ausgeführt werden. Bedingung dazu ist, dass die zweite elektrische Lage einen kapazitiven Durchgriff zum Lenkradskelett 3 hat. Dies ist immer dann der Fall, wenn die Heizungslage nicht eine geschlossene Sphäre um das Lenkradskelett 3 bildet. Bei der Auswertung ist dann lediglich auf Schalttransienten der Heizung zu achten, welche durch Mehrfachabtastung ausgeschlossen werden können.

Tabelle: Einsatzmöglichkeiten der Skelet Diagnose in verschiedenen Lenkradkonfigurationen

| Lenkradaufbau | Funktion der elektrisch leitenden Lagen im Lenkrad | | | | |
|---|---|---|---|---|---|
| | Skeleton Broken Diagnose | Zweilagig HOD | Zweilagig HOD / Heizung | Zweilagig HOD / Heizung | Dreilagig HOD / Heizung |
| Erste elektrisch leitende Lage 6 | Layer 1 | HOD Sensor | HOD Sensor | HOD Sensor | HOD Sensor |
| Zweite elektrisch leitende Lage 8 | Layer 2 | HOD Hilfslage (Guard) | Heizung | Heizung / HOD Hilfslage (Guard) | HOD Hilfslage (Guard) |
| Dritte elektrisch leitende Lage | | - | - | - | Heizung |
| Lenkradskelett | Skelet | Skelet | Skelet | Skelet | Skelet |

Galvanische Trennung in der Skeletverbindung 13 nach Figur 3:
Wird die Anbindung zum Lenkradskelett 13 über die Kapazität CSkle2ECU (Figur 3) ausgeführt, so gelten mit kleiner Abweichung die vorhergehenden Formeln, sobald die Kapazität sehr viel grösser (>zehnfache) als die anderen beteiligten Kapazitäten ist. Die Diagnose des Verlustes der Skeletverbindung 13 arbeitet also auch mit kapazitiver Anbindung sicher.

Bezugszeichen

| | |
|---|---|
| 1 | Lenkradanordnung |
| 2 | Lenkradeinrichtung |
| 3 | Lenkradskelett |
| 4 | Lenkradkranz |
| 5 | äußere Abstandsschicht |
| 6 | erste Leitlage |
| 7 | Sensorlage |
| 8 | zweite Leitlage |
| 9 | Schaumschicht |
| 10 | digitale Datenverarbeitungsvorrichtung |
| 11 | erster Anschluss der digitalen Datenverarbeitungsvorrichtung |
| 12 | zweiter Anschluss der digitalen Datenverarbeitungsvorrichtung |
| 13 | Skelettverbindung |
| 14 | dritter Anschluss der digitalen Datenverarbeitungsvorrichtung |
| 15 | Steuereinrichtung |
| 16 | Auswerteeinrichtung |
| 17 | Handerkennungseinrichtung |
| P0 | Grundphase |
| P1 | erste Phase |
| P2 | zweite Phase |
| S1...S4 | Schalter |
| C_Layer_12 | Zwischenlagenkapazität |
| C_Skeleton | Skelettkapazität |
| C_Layer_1amb | Umgebungskapazität |
| C_Skel2chass | Fahrzeugkapazität |
| C_Sekl2ECU | Anbindungskapazität |
| M | Masse |

**Patentansprüche**

1. Lenkradanordnung (1) für ein Fahrzeug, mit einer Lenkradeinrichtung (2), wobei die Lenkradeinrichtung (2)

- ein Lenkradskelett (3)
- eine erste Leitlage (6) und
- eine zweite Leitlage (8) aufweist,
wobei zwischen der ersten Leitlage (6) und der zweiten Leitlage (8) eine Zwischenlagenkapazität (C_Layer_12) ausgebildet ist,
wobei zwischen der zweiten Leitlage (8) und dem Lenkradskelett (3) eine Skelettkapazität (C_Skeleton) ausgebildet ist,
wobei das Lenkradskelett (3) über eine Skelettverbindung (13) mit einer Masse (M) des Fahrzeugs koppelbar und/oder gekoppelt ist,
wobei die Zwischenlagenkapazität (C_Layer_12) und die Skelettkapazität (C_Skeleton) einen kapazitiven Spannungsteiler für eine an der ersten Leitlage (6) anliegende Spannung bilden, wobei eine Teilspannung an der zweiten Leitlage (8) abgreifbar ist,
**gekennzeichnet durch** eine Auswerteeinrichtung (16), wobei die Auswerteeinrichtung (16) ausgebildet ist, die Teilspannung an der zweiten Leitlage (8) zu erfassen und auf Basis der erfassten Teilspannung die Skelettverbindung (13) als in Ordnung oder als nicht in Ordnung zu beurteilen.

2. Lenkradanordnung (1) nach Anspruch 1, **gekennzeichnet durch** eine Steuereinrichtung (15), wobei die Steuereinrichtung (15) ausgebildet ist, in einer ersten Phase (P1) die erste Leitlage (6) und die zweite Leitlage (8) in einen jeweils definierten und/oder gemeinsamen ersten Spannungszustand zu bringen, und in einer zweiten Phase (P2) die zweite Leitlage (8) zu entkoppeln und die erste Leitlage (6) in einen zweiten Spannungszustand zu bringen, wobei die Auswerteeinrichtung (16) ausgebildet ist, die Teilspannung in der zweiten Phase (P2) zu messen.

3. Lenkradanordnung (1) nach Anspruch 2, **dadurch gekennzeichnet, dass** der erste Spannungszustand einer Masse (M) und der zweite Spannungszustand einer Gleichspannung (VDD) entspricht.

4. Lenkradanordnung (1) nach einem der vorhergehenden Ansprüche, **dadurch gekennzeichnet, dass** zwischen der ersten Leitlage (6) und dem Lenkradskelett (3) eine Umgebungskapazität (C_Layer_1amb) ausgebildet ist.

5. Lenkradanordnung (1) nach einem der vorhergehenden Ansprüche, **dadurch gekennzeichnet, dass** die Auswerteeinrichtung (16) und die Steuereinrichtung (15) als eine gemeinsame Datenverarbeitungsvorrichtung (10) ausgebildet sind.

6. Lenkradanordnung (1) nach einem der vorhergehenden Ansprüche, **dadurch gekennzeichnet, dass** der Anschluss (11) der ersten Leitlage (6) als ein erster GPIO und/oder der zweite Anschluss (12) an der zweiten Leitlage (8) als ein zweiter GPIO ausgebildet ist.

7. Lenkradanordnung (1) nach einem der vorhergehenden Ansprüche, **dadurch gekennzeichnet, dass** die erste Lage (6) als eine Sensorlage (7) für eine HOD-Detektion ausgebildet und, dass die Lenkradanordnung (1) eine Handerkennungseinrichtung (17) aufweist.

8. Lenkradanordnung (1) nach Anspruch 7, **dadurch gekennzeichnet. dass** die Handerkennungseinrichtung (17) in der gemeinsamen Datenverarbeitungsvorrichtung (10) ausgebildet ist.

9. Lenkradanordnung (1) nach einem der vorhergehenden Ansprüche, **gekennzeichnet durch** eine dritte Lage, wobei die dritte Lage zwischen der zweiten Leitlage (8) und dem Lenkradskelett (3) angeordnet ist, wobei die Skelettkapazität (C_Skeleton) **durch** eine erste Einzelkapazität zwischen der zweiten Leitlage (8) und der dritten Leitlage und einer zweiten Einzelkapazität zwischen der dritten Leitlage und dem Lenkradskelett (3) gebildet ist.

10. Fahrzeug, **gekennzeichnet durch** eine Lenkradanordnung (1) nach einem der vorhergehenden Ansprüche.

11. Verfahren zur Überprüfung der Skelettverbindung (13) in einer Lenkradanordnung (1) nach einem der Ansprüche 1 bis 9 und/oder in einem Fahrzeug nach Anspruch 10, wobei die Teilspannung an der zweiten Leitlage (8) erfasst und auf Basis der erfassten Teilspannung die Skelettverbindung (13) als in Ordnung oder als nicht in Ordnung beurteilt wird.

12. Verfahren nach Anspruch 11, **dadurch gekennzeichnet, dass** in einer ersten Phase (P1) die erste Leitlage (6) und die zweite Leitlage (8) in einen jeweils definierten ersten Spannungszustand gebracht werden und in einer zweiten Phase (P2) die zweite Leitlage (8) entkoppelt wird und die erste Leitlage (6) in einen zweiten Spannungszustand gebracht wird, wobei der zweite Spannungszustand unterschiedlich zu dem ersten Spannungszustand ausgebildet ist, und dann die Teilspannung in der zweiten Phase gemessen wird.

**Claims**

1. A steering wheel arrangement (1) for a vehicle, comprising a steering wheel device (2), the steering wheel device (2) including

    - a steering wheel skeleton (3),
    - a first conductive layer (6), and
    - a second conductive layer (8),
    wherein an intermediate layer capacity (C_Layer_12) is formed between the first conductive layer (6) and the second conductive layer (8),
    wherein a skeleton capacity (C_Skeleton) is formed between the second conductive layer (6) and the steering wheel skeleton (3),
    wherein the steering wheel skeleton (3) can be and/or is coupled to ground (M) of the vehicle via a skeleton connection (13),
    wherein the intermediate layer capacity (C_Layer_12) and the skeleton capacity (C_Skeleton) form a capacitive voltage divider for a voltage applied to the first conductive layer (6), wherein a partial voltage can be tapped at the second conductive layer (8),

**characterized by** an evaluation device (16), wherein the evaluation device (16) is designed to detect the partial voltage at the second conductive layer (8) and to assess the skeleton connection (13) as being in order or out of order based on the detected partial voltage.

2. The steering wheel arrangement (1) according to claim 1, **characterized by** a control device (15), the control device (15) being designed to bring, in a first phase (P1), the first conductive layer (6) and the second conductive layer (8) into a defined and/or common first voltage state and to decouple, in a second phase (P2), the second conductive layer (8) and to bring the first conductive layer (6) into a second voltage state, the evaluation device (16) being designed to measure the partial voltage in the second phase (P2).

3. The steering wheel arrangement (1) according to claim 2, **characterized in that** the first voltage state corresponds to ground (M) and the second voltage state corresponds to DC voltage (VDD).

4. The steering wheel arrangement (1) according to any one of the preceding claims, **characterized in that** an ambient capacity (C_Layer_1amb) is formed between the first conductive layer (6) and the steering wheel skeleton (3).

5. The steering wheel arrangement (1) according to any one of the preceding claims, **characterized in that** the evaluation device (16) and the control device (15) are formed as a joint data processing device (10).

6. The steering wheel arrangement (1) according to any one of the preceding claims, **characterized in that** the terminal (11) of the first conductive layer (6) is designed as a first GPIO and/or the second terminal (12) is designed at the second conductive layer (8) as a second GPIO.

7. The steering wheel arrangement (1) according to any one of the preceding claims, **characterized in that** the first layer (6) is designed as a sensor layer (7) for a HoD detection, and that the steering wheel arrangement (1) includes a hand detection device (17).

8. The steering wheel arrangement (1) according to claim 7, **characterized in that** the hand detection device (17) is formed in the joint data processing device (10).

9. The steering wheel arrangement (1) according to any one of the preceding claims, **characterized by** a third layer, wherein the third layer is arranged between the second conductive layer (8) and the steering wheel skeleton (3), wherein the skeleton capacity (C_Skeleton) is formed by a first single capacity between the second conductive layer (8) and the third conductive layer and a second single capacity between the third conductive layer and the steering wheel skeleton (3).

10. A vehicle, **characterized by** a steering wheel arrangement (1) according to any one of the preceding claims.

11. A method for verifying a skeleton connection (13) in a steering wheel arrangement (1) according to any one of the claims 1 to 9 and/or in a vehicle according to claim 10, wherein the partial voltage is detected at the second conductive layer (8) and the skeleton connection (13) is assessed as OK or not OK based on the detected partial voltage.

12. The method according to claim 11, **characterized in that**, in a first phase (P1), each of the first conductive layer (6) and the second conductive layer (8) is brought into a defined first voltage state and, in a second phase (P2), the second conductive layer (8) is decoupled and the first conductive layer (6) is brought into a second voltage state, wherein the second voltage state is designed to be different from the first voltage state, and then the partial voltage is measured in the second phase.

**Revendications**

1. Agencement de volant de direction (1) pour un véhicule, comprenant un dispositif de volant (2), pour lequel le dispositif de volant (2) comprend

     - une armature du volant (3)
     - une première couche conductrice (6) et

- une deuxième couche conductrice (8),

pour lequel une capacité de couche intermédiaire (C_Layer_12) est formée entre la première couche conductrice (6) et la deuxième couche conductrice (8),

pour lequel une capacité d'armature (C_Skeleton) est formée entre la deuxième couche conductrice (8) et l'armature du volant (3).

pour lequel l'armature du volant (3) peut être couplé et/ou est couplé à une masse (M) du véhicule par l'intermédiaire d'une connexion de l'armature (13),

pour lequel la capacité intermédiaire (C_Layer_12) et la capacité de l'armature (C_Skeleton) forment un diviseur de tension capacitif pour une tension appliquée à la première couche conductrice (6), pour lequel une tension partielle peut être prélevée sur la deuxième couche conductrice (8),

**caractérisé par** un dispositif d'évaluation (16), pour lequel le dispositif d'évaluation (16) est conçu pour détecter la tension partielle sur la deuxième couche conductrice (8) et pour évaluer la connexion de l'armature (13) comme étant en bon état ou en mauvais état sur la base de la tension partielle détectée.

2. Agencement de volant de direction (1) selon la revendication 1, **caractérisé par** un dispositif de commande (15), pour lequel le dispositif de commande (15) est conçu pour, dans une première phase (P1), amener la première couche conductrice (6) et la deuxième couche conductrice (8) dans un premier état de tension défini et/ou commun, et, dans une deuxième phase (P2), de découpler la deuxième couche conductrice (8) et de mettre la première couche conductrice (6) dans un deuxième état de tension, pour lequel le dispositif d'évaluation (16) est conçu pour mesurer la tension partielle dans la deuxième phase (P2).

3. Agencement de volant de direction (1) selon la revendication 2, **caractérisé en ce que** le premier état de tension correspond à une masse (M) et le deuxième état de tension correspond à une tension continue (VDD).

4. Agencement de volant de direction (1) selon l'une des revendications précédentes, **caractérisé en ce qu'**une capacité ambiante (C_Layer_1amb) est formée entre la première couche conductrice (6) et l'armature du volant (3).

5. Agencement de volant de direction (1) selon l'une des revendications précédentes, **caractérisé en ce que** le dispositif d'évaluation (16) et le dispositif de commande (15) sont conçus comme un dispositif commun de traitement des données (10).

6. Agencement de volant de direction (1) selon l'une des revendications précédentes, **caractérisé en ce que** la connexion (11) de la première couche conductrice (6) est conçue comme un premier GPIO et/ou la deuxième connexion (12) sur la deuxième couche conductrice (8) est conçue comme un deuxième GPIO.

7. Agencement de volant de direction (1) selon l'une des revendications précédentes, **caractérisé en ce que** la première couche (6) est conçue comme une couche de capteur (7) pour une détection des mains HOD, de sorte que le dispositif de volant (1) comporte un dispositif de reconnaissance de la main (17).

8. Agencement de volant de direction (1) selon la revendication 7, **caractérisé en ce que** le dispositif de reconnaissance de la main (17) est formé dans le dispositif commun de traitement des données (10).

9. Agencement de volant de direction (1) selon l'une des revendications précédentes, **caractérisé par** une troisième couche, pour lequel la troisième couche est disposée entre la deuxième couche conductrice (8) et l'armature du volant (3), pour lequel la capacité de l'armature (C_Skeleton) est formée par une première capacité individuelle entre la deuxième couche conductrice (8) et la troisième couche conductrice et une deuxième capacité individuelle entre la troisième couche conductrice et l'armature du volant (3).

10. Véhicule **caractérisé par** un agencement de volant (1) selon l'une des revendications précédentes.

11. Procédé de contrôle de la connexion de l'armature (13) dans un agencement de volant de direction (1) selon l'une des revendications 1 à 9 et/ou dans un véhicule selon la revendication 10, pour lequel la tension partielle est détectée au niveau de la deuxième couche conductrice (8) et, sur la base de la tension partielle détectée, la connexion de l'armature (13) est jugée en bon état ou en mauvais état.

12. Procédé selon la revendication 11, **caractérisé en ce que**, dans une première phase (P1), la première couche conductrice (6) et la deuxième couche conductrice (8) sont amenées dans un premier état de tension défini respectif et, dans une deuxième phase (P2), la deuxième couche conductrice (8) est découplée et la première couche conductrice (6) est amenée dans un deuxième état de tension, pour lequel le deuxième état de tension est différent du premier état de tension, et ensuite la tension partielle est mesurée lors de la deuxième phase.

Fig. 1

Fig. 2a

Fig. 2b

Fig. 2c

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014223128 A1
- US 2021270637 A1